(19) Europäisches Patentamt
European Patent Office
Office européen des brevets

(11) EP 3 646 721 B1

(12) EUROPEAN PATENT SPECIFICATION

(45) Date of publication and mention
of the grant of the patent:
08.09.2021 Bulletin 2021/36

(51) Int Cl.:
A01K 1/015 (2006.01)

(21) Application number: 18823801.8

(22) Date of filing: 14.02.2018

(86) International application number:
PCT/JP2018/005101

(87) International publication number:
WO 2019/003488 (03.01.2019 Gazette 2019/01)

(54) **ANIMAL EXCRETA DISPOSAL SHEET**

ENTSORGUNGSFOLIE FÜR TIEREXKREMENTE

FEUILLE D'ENLÈVEMENT D'EXCRÉMENTS D'ANIMAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2017 JP 2017127623**

(43) Date of publication of application:
**06.05.2020 Bulletin 2020/19**

(73) Proprietor: **Unicharm Corporation
Shikokuchuo-shi, Ehime 799-0111 (JP)**

(72) Inventors:
• **HIROSHIMA, Kenji
Kanonji-shi, Kagawa 769-1602 (JP)**
• **MATSUO, Takayuki
Kanonji-shi, Kagawa 769-1602 (JP)**

(74) Representative: **Krauns, Christian
Wallinger Ricker Schlotter Tostmann
Patent- und Rechtsanwälte Partnerschaft mbB
Zweibrückenstraße 5-7
80331 München (DE)**

(56) References cited:
**EP-A1- 1 554 927      JP-A- 2005 058 167
JP-A- 2005 198 598     JP-A- 2012 029 625
JP-A- 2015 112 073     JP-U- 3 109 973**

**Description**

FIELD

The present invention relates to an excreta treatment sheet for animals to be used when rearing an animal such as a dog.

BACKGROUND

As excreta treatment sheets for animals, for treatment of excreta such as urine that have been excreted by pets, there are known excreta treatment sheets for animals comprising a liquid-permeable top sheet, a liquid-impermeable back sheet, and an absorbent body disposed between them.

Also known are excreta treatment sheets for animals wherein excreted fluid such as urine that has been discharged from a pet is easily diffused in the in-plane direction of the sheet. Examples of such an excreta treatment sheet for animals include the one disclosed in PTL 1, which is an excreta absorbent article for pets having a liquid-permeable top sheet composed of two layers, an upper layer and a lower layer, and a liquid-impermeable back sheet, with an absorbent body provided between them, the excreta absorbent article for pets using a diffusion sheet such as a diffusion paper or crepe paper as the lower layer of the top sheet.

The EP 1 554 927 AI discloses a pet sheet including a back sheet, a liquid-permeable top sheet and an absorbent core disposed between the back sheet and the top sheet for the absorption and retention of liquid. The absorbent core is a pulp layer mixed with a first superabsorbent material. A second superabsorbent material is disposed in a spaced pattern between the absorbent core and the top sheet. The first superabsorbent material has a faster liquid absorption rate than the second superabsorbent material.

[CITATION LIST]

[PATENT LITERATURE]

[PTL 1] Japanese Unexamined Patent Publication No. 2009-254345

SUMMARY

[TECHNICAL PROBLEM]

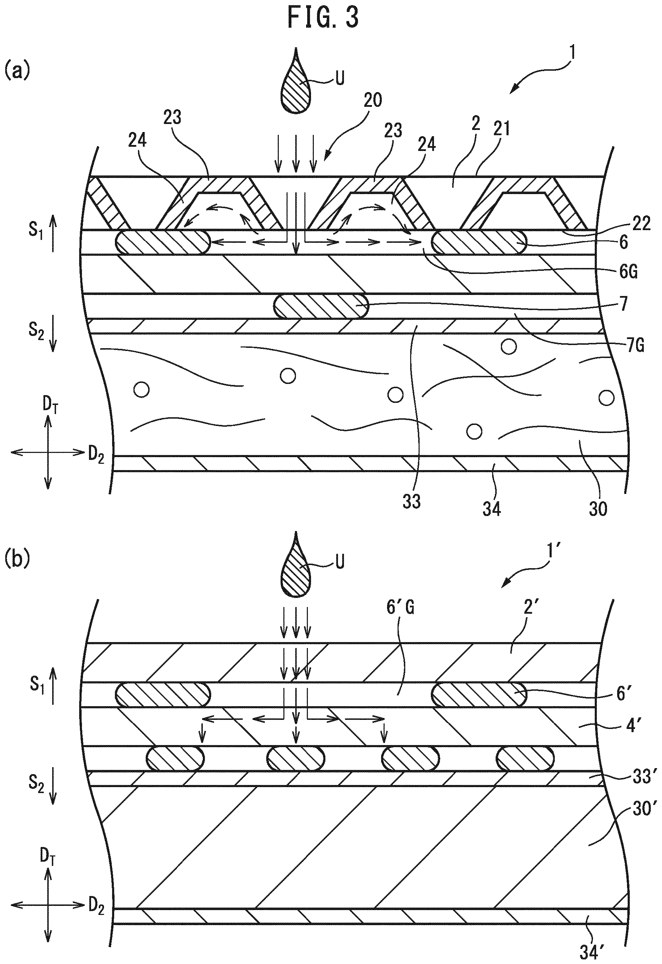

In a conventional excreta treatment sheet for animals such as the excreta absorbent article for pets disclosed in PTL 1, a hydrophilic fiber sheet with excellent liquid permeability (for example, a tissue, crepe paper or nonwoven fabric) is usually used as the diffusion sheet (interlayer sheet) that is situated on the top side of the absorbent body, and therefore when excreted fluid such as urine is supplied to the excreta treatment sheet for animals, the excreted fluid permeates into the diffusion sheet once it passes through the top sheet and reaches the diffusion sheet, flowing inside it and being diffused in the in-plane direction (see Fig. 3(b)).

However, when excreted fluid flows inside a diffusion sheet in this manner, flow of the excreted fluid inside the diffusion sheet is easily resisted by the constituent fibers of the fiber sheet forming the diffusion sheet, and therefore with a conventional excreta treatment sheet for animals, it some cases it is difficult to obtain sufficient diffusibility and it is not possible to absorb excreted fluid over a wide area of the absorbent body (i.e., the absorbent body cannot be efficiently utilized).

It is therefore an object of the present invention to provide an excreta treatment sheet for animals that has excellent diffusibility for excreted fluid and allows the absorbent body to be efficiently utilized.

[SOLUTION TO PROBLEM]

The problem of the present invention is solved by an excreta treatment sheet for an animal according to the independent claim 1. The dependent claims refer to advantageous developments of the present invention.

One aspect (aspect 1) of the invention is an excreta treatment sheet for an animal including a liquid-permeable top sheet that forms a supply surface for excreta, an absorbent body, and an interlayer sheet situated between them, wherein the interlayer sheet has a liquid permeability of greater than 0 and lower than that of the top sheet.

Since the interlayer sheet situated between the top sheet and the absorbent body in the excreta treatment sheet for an animal of this aspect has a liquid permeability that is greater than 0 and lower than that of the top sheet, excreted fluid such as urine that has been discharged from an animal, after having penetrated the top sheet and reached the interlayer sheet which has low liquid permeability, tends to diffuse in the in-plane direction on the surface of the interlayer sheet, rather than migrating into the interlayer sheet. Thus, since the excreta treatment sheet for animals of this aspect allows excreted fluid that has permeated the top sheet to easily diffuse in the in-plane direction on the surface of the interlayer sheet, excreted fluid is less likely to encounter flow resistance compared to a conventional excreta treatment sheet for an animal that causes diffusion into the interior of the interlayer sheet, and excreted fluid can be diffused over a wider area in the in-plane direction, and as a result, excreted fluid can be absorbed into the absorbent body from a wider region.

According to the invention, the interlayer sheet has a slower liquid permeation rate than that of the top sheet.

Since the excreta treatment sheet for an animal has a slower liquid permeation rate for the interlayer sheet than that of the top sheet, excreted fluid that has permeated the top sheet is less able to permeate the interlayer sheet (i.e., it tends to pool on the surface of the interlayer sheet), and more easily diffuses in the in-plane direction on the surface of the interlayer sheet. Thus, the excreta treatment sheet for an animal allows excreted fluid to be diffused over a wider area in the in-plane direction, and as a result, excreted fluid can be absorbed into the absorbent body from a wider region.

According to the invention, the top sheet has a plurality of open holes running through a thickness direction.

Since the top sheet in the excreta treatment sheet for an animal has a plurality of open holes running through the thickness direction, excreted fluid can be rapidly caused to migrate to the surface of the interlayer sheet, through the plurality of open holes, while the difference in liquid permeability between the top sheet and the interlayer sheet tends to be more distinct, allowing diffusibility of excreted fluid in the in-plane direction to be more reliably ensured.

According to the invention, each of the open holes is formed so that a hole diameter on a first surface forming the supply surface of the top sheet is larger than a hole diameter on a second surface opposite the first surface, and between adjacent open holes, the top sheet has a gap where the second surface is depressed toward a supply surface side.

Since the excreta treatment sheet for an animal has a specific structure wherein the open holes of the top sheet are formed with hole diameters on the first surface that are larger than the hole diameters on the second surface, excreted fluid supplied to the first surface of the top sheet is caused to rapidly migrate to the surface of the interlayer sheet through the open holes with the specified structure, while minimizing rewetting. Furthermore, since the top sheet of the excreta treatment sheet for an animal of this aspect has gaps between adjacent open holes, where the second surface is depressed toward the supply surface side, excreted fluid that has permeated the top sheet and reached the surface of the interlayer sheet is drawn upward toward the gaps of the top sheet by capillary movement, while tending to be diffused on the surface of the interlayer sheet in the in-plane direction.

Therefore, the excreta treatment sheet for an animal allows excreted fluid to be diffused over an even wider area in the in-plane direction, and as a result, excreted fluid can be absorbed into the absorbent body from an even wider region.

According to another aspect (aspect 2) of the invention, in the excreta treatment sheet for an animal of aspect 1, the top sheet is hydrophilic.

Since the top sheet of the excreta treatment sheet for an animal of this aspect is hydrophilic, excreted fluid such as urine that has been discharged from an animal easily permeates the top sheet (i.e., it is less able to diffuse in the in-plane direction of the top sheet), allowing excreted fluid to more advantageously diffuse on the surface of the interlayer sheet.

According to yet another aspect (aspect 3) of the invention, in the excreta treatment sheet for an animal of any one of aspects 1 to 2, the interlayer sheet includes pulp and has a basis weight of 40 g/m$^2$ or greater.

Since the interlayer sheet of the excreta treatment sheet for an animal of this aspect includes pulp and has a basis weight of 40 g/m$^2$ or greater, excreted fluid that has diffused in the in-plane direction on the surface of the interlayer sheet can be caused to migrate more reliably to the absorbent body, with little liquid residue.

According to the invention, the interlayer sheet is a fiber sheet formed of hydrophobic synthetic fibers.

Since the interlayer sheet in the excreta treatment sheet for an animal is a fiber sheet formed of hydrophobic synthetic fibers, excreted fluid is less able to permeate in the thickness direction due to the hydrophobicity of the synthetic fibers, while gaps between the synthetic fibers in the fiber sheet can be ensured as flow channels for excreted fluid.

Therefore, the excreta treatment sheet for an animal allows excreted fluid that has reached the surface of the interlayer sheet to be slowly diffused in the in-plane direction, and can also cause the diffused excreted fluid to migrate more reliably to the absorbent body.

According to yet another aspect (aspect 4) of the invention, in the excreta treatment sheet for an animal of any one of aspects 1 to 3, the interlayer sheet has a plurality of open holes running through a thickness direction.

Since the interlayer sheet of the excreta treatment sheet for an animal of this aspect has a plurality of open holes running through the thickness direction, excreted fluid that has diffused on the surface of the interlayer sheet in the in-plane direction can be caused to migrate more reliably to the absorbent body, while appropriately setting the number of open holes of the interlayer sheet, as well as their hole diameters (open area percentage), shapes and locations, allows the liquid permeability of the interlayer sheet to be adjusted so that the diffusibility of excreted fluid in the in-plane direction can be regulated as desired.

According to yet another aspect (aspect 5) of the invention, in the excreta treatment sheet for an animal of any one of aspects 1 to 4, the absorbent body includes pulp and a superabsorbent polymer.

Since the absorbent body of the excreta treatment sheet for an animal of this aspect includes pulp and a superabsorbent polymer, it is possible to ensure a fixed absorption rate (absorption capacity) for the absorbent body, while the absorption rate of the absorbent body can be regulated by including a superabsorbent polymer that has a slower absorption rate than pulp. Thus, excreted fluid that has reached the absorbent body more easily pools on the surface of the absorbent body, allowing excreted fluid to be more easily diffused in the in-plane direction on the surface of the absorbent body.

Therefore, the excreta treatment sheet for an animal of this aspect can absorb excreted fluid into the absorbent body from an even wider region.

According to yet another aspect (aspect 6) of the invention, in the excreta treatment sheet for an animal of any one of aspects 1 to 5, the top sheet and the interlayer sheet are partially joined via an adhesive layer situated between them.

Since the excreta treatment sheet for an animal of this aspect has the top sheet and interlayer sheet partially joined via an adhesive layer, a flow channel for excreted fluid diffusing in the in-plane direction can be ensured between the top sheet and the interlayer sheet, while a fixed spacing can be ensured between the top sheet and interlayer sheet, and capillary movement that drives diffusion of excreted fluid in the in-plane direction can be more easily exhibited.

Therefore, the excreta treatment sheet for an animal of this aspect can cause diffusion of excreted fluid between the top sheet and the interlayer sheet (i.e., on the surface of the interlayer sheet) over an even wider area in the in-plane direction.

According to yet another aspect (aspect 7) of the invention, in the excreta treatment sheet for an animal of any one of aspects 1 to 6, the interlayer sheet and the absorbent body are partially joined via an adhesive layer situated between them.

Since the excreta treatment sheet for an animal of this aspect has the interlayer sheet and absorbent body partially joined via an adhesive layer, a flow channel allowing diffusion of excreted fluid in the in-plane direction can be ensured between the interlayer sheet and absorbent body, while a fixed spacing can be ensured between the interlayer sheet and absorbent body, and capillary movement that drives diffusion of excreted fluid in the in-plane direction can be more easily exhibited.

Therefore, the excreta treatment sheet for an animal of this aspect can cause diffusion of excreted fluid between the interlayer sheet and absorbent body (i.e., on the surface of the absorbent body) over a wider area in the in-plane direction.

[ADVANTAGEOUS EFFECTS OF INVENTION]

Since the excreta treatment sheet for an animal of this invention allows excreted fluid that has permeated the top sheet to easily diffuse in the in-plane direction on the surface of the interlayer sheet, excreted fluid is less likely to encounter flow resistance compared to a conventional excreta treatment sheet for an animal that causes diffusion into the interior of the interlayer sheet, and excreted fluid can be diffused over a wider area in the in-plane direction, and as a result, excreted fluid can be absorbed into the absorbent body from a wider region.

Therefore, the excreta treatment sheet for an animal of the invention has excellent diffusibility for excreted fluid and allows the absorbent body to be efficiently utilized.

BRIEF DESCRIPTION OF DRAWINGS

FIG. 1 is a perspective view of an excreta treatment sheet for animals 1 according to an embodiment of the invention.
FIG. 2 is a cross-sectional view of the excreta treatment sheet for animals 1 of FIG. 1, along line II-II.
FIG. 3(a) is a magnified cross-sectional view of the main portion of the excreta treatment sheet for animals 1 corresponding to FIG. 2, and FIG. 3(b) is a magnified cross-sectional view of the main portion of a conventional excreta treatment sheet for animals 1', corresponding to FIG. 3(a).

DESCRIPTION OF EMBODIMENTS

Preferred embodiments of the excreta treatment sheet for animals according to the invention will now be described in detail with reference to the accompanying drawings. Throughout the present description, unless otherwise specified, the concept of "an object (for example, an excreta treatment sheet for animals) situated on the horizontal plane in the expanded state with the excreta supply surface facing upward, being viewed in the thickness direction of the object from the top side in the vertical direction" will be referred to simply by the term "plan view".

Also throughout the present description, the "thickness direction" is the "vertical direction of an object placed on a horizontal plane in the expanded state", the "in-plane direction" is the "direction in which the plane of an approximately sheet-like object (such as an excreta treatment sheet for animals, top sheet or interlayer sheet) extends in the plan view (i.e., the horizontal plane direction)", the thickness direction and the in-plane direction being in a mutually perpendicular relationship.

Also throughout the present description, the "side relatively near to the supply surface for excreta that has been discharged from an animal, in the thickness direction of the excreta treatment sheet for animals and each of the structural members (for example, the top sheet, interlayer sheet and absorbent body) of the excreta treatment sheet for animals" will be referred to as the "supply surface side", and the "side relatively far from the supply surface for excreta that has been discharged from an animal, in the thickness direction of the excreta treatment sheet for animals and each structural member of the excreta treatment sheet for animals", will be referred to as the "non-supply surface side".

Throughout the present description, the "surface of the supply surface side of the excreta treatment sheet for animals and of each structural member of the excreta treatment sheet for animals" may be referred to simply as the "surface" (for example, the "surface on the supply surface side of the interlayer sheet" may be referred to simply as the "surface of the interlayer sheet").

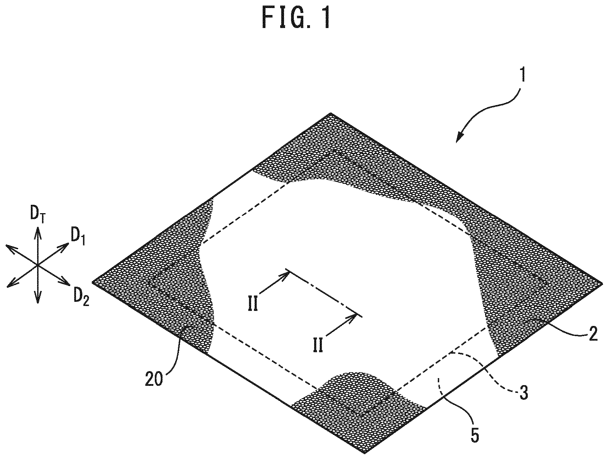

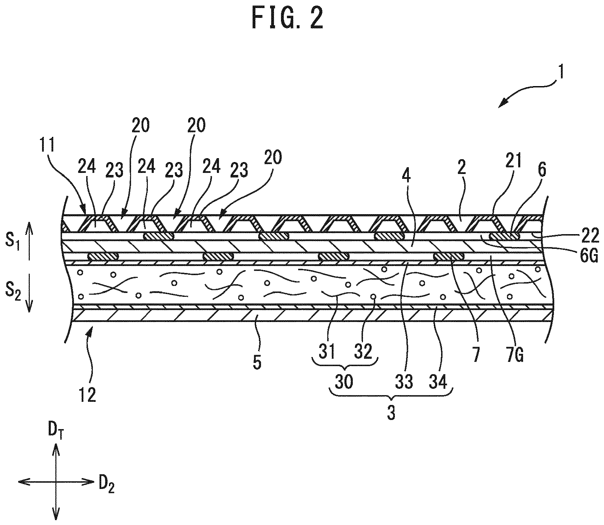

Fig. 1 is a perspective view of an excreta treatment sheet for animals 1 according to an embodiment of the invention, and Fig. 2 is a cross-sectional view of the excreta treatment sheet for animals 1 along line II-II in Fig. 1. Fig. 3(a) is a magnified cross-sectional view of the main portion of the excreta treatment sheet for animals 1 corresponding to Fig. 2, and Fig. 3(b) is a magnified cross-sectional view of the main portion of a conventional excreta treatment sheet for animals 1', corresponding to Fig. 3(a).

As shown in Fig. 1 and Fig. 2, the excreta treatment sheet for animals 1 of the first embodiment of the invention has a first direction $D_1$, a second direction $D_2$ and a thickness direction $D_T$ which are mutually perpendicular, and is constructed of a layered sheet having an essentially square outer shape in the plan view. According to the invention, the outer shape of the excreta treatment sheet for animals is not limited to such an essentially square shape, and any desired outer shape such as rectangular, polygonal or circular may be employed, depending on the purpose of use, design, etc. Furthermore, the outer dimensions of the excreta treatment sheet for animals in the plan view may be set as appropriate depending on the type and size of the animal to which the excreta treatment sheet is to be applied, and when the animal is a dog, for example, the respective lengths in the first direction $D_1$ and the second direction $D_2$ are in the range of 250 mm to 1200 mm.

As shown in Fig. 2, the excreta treatment sheet for animals 1 of this embodiment comprises, in the thickness direction $D_T$, a liquid-permeable top sheet 2 situated on the supply surface side $S_1$ of the excreta treatment sheet for animals 1, which forms a supply surface 11 for excreta that have been discharged from an animal such as a dog, a liquid-absorbing absorbent body 3 situated on the non-supply surface side $S_2$ of the top sheet 2, a liquid-diffusing interlayer sheet 4 situated between them (i.e., situated on the non-supply surface side $S_2$ of the top sheet 2), and a liquid-impermeable back sheet 5 situated on the non-supply surface side $S_2$ of the absorbent body 3 and facing the surface on which the excreta treatment sheet for animals 1 is to be set (i.e., the setting surface).

In addition, the excreta treatment sheet for animals 1 has, in the plan view, a center section situated at the center of the excreta treatment sheet for animals 1 and delineated as the portion where the top sheet 2, interlayer sheet 4, absorbent body 3 and back sheet 5 overlap in the thickness direction $D_T$, and frame-shaped flap sections extending from the outer perimeter edges of the center section to the outer perimeter edges of the excreta treatment sheet for animals 1, in the in-plane direction, and delineated as portions where the top sheet 2 and back sheet 5 overlap in the thickness direction $D_T$.

In the excreta treatment sheet for animals 1 of this embodiment, the interlayer sheet 4 has a liquid permeability of greater than 0 and lower than that of the top sheet 2.

Throughout the present description, "liquid permeability" means the mass ratio of the amount of a prescribed amount (10 ml) of artificial urine (i.e. physiological saline (22°C, 0.9% NaClaq)) supplied to the surface of an object (i.e. the top sheet or interlayer sheet) that permeates the object within a prescribed time period (within 10 minutes) (i.e., the mass ratio (mass%) of the amount of permeation with respect to the amount of physiological saline supplied), and it can be obtained by the following method of measurement.

In the excreta treatment sheet for animals 1 of this embodiment, since the interlayer sheet 4 situated between the top sheet 2 and absorbent body 3 has a liquid permeability of greater than 0 and lower than that of the top sheet 2 (i.e., it allows permeation of excreted fluid at a fixed rate but is less permeable to excreted fluid than the top sheet 2), then when excreted fluid such as urine U that has been discharged from an animal has permeated the top sheet 2 and reached the interlayer sheet 4 that has low liquid permeability, as shown in Fig. 3(a), it tends to diffuse on the surface of the supply surface side $S_1$ of the interlayer sheet 4 in the in-plane direction (i.e., the direction that includes the plane extending in the first direction $D_1$ and second direction $D_2$), rather than migrating into the interlayer sheet 4.

Thus, since the excreta treatment sheet for animals 1 of this embodiment allows excreted fluid U to easily diffuse in the in-plane direction on the surface of the interlayer sheet 4, the excreted fluid U is less likely to encounter flow resistance compared to a conventional excreta treatment sheet for animals 1' which causes diffusion in the interior of the interlayer sheet 4', as shown in Fig. 3(b), and therefore the excreted fluid U can be diffused over a wider area in the in-plane direction, and as a result, the excreted fluid U can be absorbed into the absorbent body 3 through a wider region.

The excreta treatment sheet for animals of the invention is set at a prescribed location of a rearing space for an animal such as a pet (for example, indoors) in the expanded state shown in Fig. 1, so that the top sheet is situated on the supply surface side for excreta, and when excreted fluid such as urine have been discharged from an animal, it is used to absorb and hold the excreted fluid to keep the rearing space in a clean condition. The excreta treatment sheet for animals of the invention may also be set directly on the floor surface of the rearing space or on the ground outdoors, or it may be set at a prescribed location of a holder or tray of a system toilet.

The "animal" to which the excreta treatment sheet for animals of the invention is to be applied is not particularly restricted so long as it is an animal that can be reared, such as a pet, and it may be an animal such as a dog, cat or rabbit. The "excreta" that are to be absorbed and held by the excreta treatment sheet for animals of the invention are not limited to urine, and for example, they may consist of any of various liquid to low-viscosity body fluids including oral liquids such as saliva, blood or low-viscosity feces. Excreta may therefore be referred to as "excreted fluid" throughout the present description.

Each of the members composing the excreta treatment sheet for animals of the invention will now be described in detail, using the excreta treatment sheet for animals 1 of the embodiment described above.

[Top sheet]

In the excreta treatment sheet for animals 1 of the embodiment described above, as shown in Fig. 1, the top sheet 2 is formed of a liquid-permeable sheet-like member that has an essentially square outer shape similar to the outer shape of the excreta treatment sheet for animals 1, extending from the edge on one side across to the edge on the other side in the first direction $D_1$ of the excreta treatment sheet for animals 1, while extending from the edge on one side across to the edge on the other side in the second direction $D_2$, and that in the thickness direction $D_T$ of the excreta treatment sheet for animals 1, is disposed at a location that first receives excreted fluid such as urine that has been discharged from an animal (i.e., the location of the supply surface side $S_1$) (in other words, it forms the supply surface 11 of the excreta treatment sheet for animals 1), and causes migration of excreted fluid from the supply surface 11 to the interlayer sheet 4 located on the non-supply surface side $S_2$.

According to the invention, the outer shape of the top sheet is not limited to this aspect, and any desired outer shape may be employed depending on the purpose of use, so long as it allows all of the surface on the supply surface side of the absorbent body to be covered.

Moreover, throughout the present description, the surface of the top sheet forming the supply surface of the excreta treatment sheet for animals (i.e., the side to which excreta discharged from an animal is supplied) will be referred to as the "first surface", and the surface on the opposite side (i.e., the non-supply surface side) will be referred to as the "second surface".

For this embodiment, as shown in Fig. 1 and Fig. 2, the top sheet 2 has a plurality of open holes 20 running through the thickness direction $D_T$, each of the plurality of open holes 20 having a specific structure in which the hole diameters on the first surface 21 of the top sheet 2 (i.e., the diameters of the open holes 20) are formed larger than the hole diameters on the second surface 22. More specifically, as shown in Fig. 2, the open holes 20 have tapered hole structures wherein the hole diameters gradually decrease from the first surface 21 toward the second surface 22.

Also, as shown in Fig. 2, the top sheet 2 has gaps 24 where the second surface 22 is depressed toward the supply surface side $S_1$, between adjacent open holes 20, 20.

Since the top sheet 2 thus has a plurality of open holes 20 running through the thickness direction $D_T$, excreted fluid supplied to the first surface 21 of the top sheet 2 (i.e., the supply surface 11 of the excreta treatment sheet for animals 1) can be rapidly caused to migrate to the surface of the interlayer sheet 4, through the plurality of open holes 20, while the difference in liquid permeability between the top sheet 2 and the interlayer sheet 4 tends to be more distinct, allowing diffusibility of excreted fluid in the in-plane direction to be more reliably ensured.

For this embodiment, since the open holes 20 of the top sheet 2 have specific structures formed wherein the hole diameters on the first surface 21 are larger than the hole diameters on the second surface 22, excreted fluid supplied to the first surface 21 of the top sheet 2 is caused to rapidly migrate to the surface of the interlayer sheet 4 through the open holes 20 with the specified structures, while minimizing rewetting.

Furthermore, since the top sheet 2 has gaps 24 between adjacent open holes 20, 20, where the second surface 22 is depressed toward the supply surface side $S_1$, then as shown in Fig. 3(a), excreted fluid U that has permeated the top sheet 2 and has reached the surface of the interlayer sheet 4 can be drawn upward toward the gaps 24 of the top sheet 2 by capillary movement, while tending to be diffused on the surface of the interlayer sheet 4 in the in-plane direction.

Therefore, the excreta treatment sheet for animals 1 comprising such a special top sheet 2 can cause diffusion of excreted fluid U over an even wider area in the in-plane direction, and as a result, excreted fluid U can be absorbed into the absorbent body 3 from an even wider region.

According to the invention, the structure of the top sheet is not limited to one having the plurality of open holes so long as it can exhibit the effect of the invention, but when the top sheet has such a plurality of open holes, the planar shapes and sizes of the open holes, and their number and arrangement, are not particularly restricted so long as the effect of the open holes is not inhibited, and the open holes employed may be of any type suited for the desired liquid permeability, flexibility and strength.

The liquid-permeable sheet-like member to be used as the top sheet for the invention is not particularly restricted so long as it has the prescribed liquid permeability, and for example, a resin sheet having a plurality of open holes; a sheet-like fiber structure such as a nonwoven fabric, woven fabric or knitted fabric, which may be an air-through nonwoven fabric, SMS nonwoven fabric (i.e., a spunbond/meltblown/spunbond layered nonwoven fabric), spunbond nonwoven fabric or point bond nonwoven fabric (in other words, a fiber sheet); or a porous fiber structure having a plurality of through-holes (open holes) in the fiber structure (in other words, a porous fiber sheet), may be suitably used.

The top sheet is preferably hydrophilic. If the top sheet is hydrophilic, excreted fluid such as urine that has been discharged from an animal will easily permeate the top sheet (i.e., it will be less able to diffuse in the in-plane direction of the top sheet), thus allowing excreted fluid to more advantageously diffuse in the in-plane direction on the surface of the interlayer sheet.

The means for imparting the top sheet with hydrophilicity is not particularly restricted, and for example, the surface of the sheet-like member or the surface of the fibers composing the sheet-like member may be surface-treated by coating of a treatment agent such as a surfactant or hydrophilic agent, or compound treatment may be carried out, in which a surfactant or hydrophilic agent is kneaded into the resin material forming the sheet-like member (for example, resin fibers or a resin sheet).

According to the invention, when a resin sheet is used as the top sheet, the constituent resin is not particularly restricted, and it may be a thermoplastic resin, examples of which include polyolefin-based resins such as polyethylene and polypropylene, polyester-based resins such as polyethylene terephthalate and polylactic acid, and polyamide-based resins such as 6-nylon, or a thermoplastic resin composition comprising any combination of two or more of these thermoplastic resins.

Even when such a sheet-like fiber structure is used as the top sheet, the constituent fibers are not particularly restricted and may be cellulosic fibers, including cellulose fibers such as ground pulp or cotton, regenerated cellulose fibers such as rayon or fibril rayon and semisynthetic cellulose fibers such as acetate or triacetate; and resin fibers composed of thermoplastic resins including polyolefin-based resins such as polyethylene and polypropylene; polyester-based resins such as polyethylene terephthalate and polylactic acid; and polyamide-based resins such as 6-nylon, or thermoplastic resin compositions comprising any combinations of two or more of these thermoplastic resins, and the fibers may be used alone or in combinations of two or more different types of fibers. When resin fibers are to be used as the constituent fibers of the sheet-like fiber structure, their structure is not particularly restricted, the fibers either having a common simple structure, or alternatively, being composite fibers such as core-sheath fibers with high-density polyethylene as the sheath component and polyethylene terephthalate as the core component.

The constituent resin and constituent fibers may include optional additives such as pigments, aromatics, deodorants, antimicrobial agents or the like on the surface and/or interior, so long as the effect of the invention is not impeded, such additives being used either alone or in combinations of two or more types.

According to the invention, the basis weight of the top sheet is not particularly restricted so long as it has the prescribed liquid permeability and strength, and it may be in the range of 6 g/m$^2$ to 40 g/m$^2$, for example, and is preferably in the range of 10 g/m$^2$ to 30 g/m$^2$. If the basis weight of the top sheet is within this range it will be possible to maintain prescribed liquid permeability allowing function as a top sheet, while ensuring a fixed level of strength, and it will therefore be resistant to tearing when an animal such as a dog steps onto the excreta treatment sheet for animals, and when the top sheet is made of the aforementioned sheet-like fiber structure, since the interfiber distances between the constituent fibers are within the prescribed range, capillary movement is more easily exhibited, whereby excreted fluid such as urine is caused to migrate from the supply surface side to the non-supply surface side of the top sheet. Another advantage is that after excreted fluid has permeated the top sheet, the excreted fluid that has diffused in the in-plane direction on the surface of the interlayer sheet is unlikely to be visible due to the compacted structure of the constituent fibers in the top sheet.

According to the invention, as mentioned above, the structure of the top sheet is not limited to one having a plurality of open holes so long as the effect of the invention can be exhibited, and the top sheet used may be one without open holes, having an essentially flat structure or an arbitrary protrusion-recess structure.

When the top sheet used has a protrusion-recess structure, the form of the protrusion-recess structure is not particularly restricted and may be, in the plan view, a ridge-groove structure composed of a plurality of elevated sections extending in a prescribed direction of the top sheet and aligned at prescribed intervals in the direction perpendicular to the prescribed direction, and a plurality of recessed grooves situated between adjacent elevated sections and extending parallel to the elevated sections, the internal structures of the elevated sections being either hollow or solid; a protrusion-recess structure comprising a plurality of arranged hemispherical or cylindrical raised sections on approximately flat bases; or a protrusion-recess structure having raised sections and recesses formed in an irregular manner across essentially the entirety of the first surface of the top sheet.

Of these structures, a top sheet having a protrusion-recess structure on the first surface, as the supply surface for excreted fluid, has excellent liquid permeability allowing permeation of excreted fluid in the thickness direction, while the elevated sections or raised sections block excreted fluid flowing on the first surface of the top sheet, making it difficult for excreted fluid to diffuse in the in-plane direction on the first surface of the top sheet, and therefore an advantage is provided in that excreted fluid supplied to the supply surface of the excreta treatment sheet for animals (i.e., the first surface of the top sheet) can be caused to rapidly migrate to the non-supply surface side (i.e., onto the surface of the interlayer sheet).

The means for providing a protrusion-recess structure to the sheet-like member that is to form the top sheet is not particularly restricted, and examples include a method of continuously blasting gas (for example, air) onto a fiber web, or any desired shaping method such as compression molding or gear stretching.

A resin sheet having a plurality of open holes according to the embodiment described above may be obtained by setting a non-perforated resin sheet on the surface of a net or a base material with a porous structure and, either after or while heating it to soften the resin sheet, drawing the softened resin sheet from the back side of the net or of the base material with a porous structure, to locally rupture the resin sheet and form a plurality of open holes.

The dimensional shape and thickness of the top sheet for the invention are not particularly limited so long as the effect of the invention is not inhibited, and any dimensional shape or thickness may be employed according to the desired liquid permeability, liquid diffusibility and strength.

[Interlayer sheet]

In the excreta treatment sheet for animals 1 of the embodiment described above, as shown in Fig. 1 and Fig. 2, the interlayer sheet 4 is situated between the top sheet 2 and the absorbent body 3, in the thickness direction $D_T$, and in the plan view, it has an essentially square outer shape extending in the first direction $D_1$ and the second direction $D_2$ so as to cover essentially the entire surface of the supply surface side $S_1$ of the absorbent body 3. As shown in Fig. 3(a), the interlayer sheet 4 is formed of a sheet-like member that is able to diffuse excreted fluid U that has permeated the top sheet 2 situated on the supply surface side $S_1$, in the in-plane direction on the surface of the supply surface side $S_1$ of the interlayer sheet 4. The sheet-like member also has a prescribed level of liquid permeability allowing excreted fluid U that has been diffused on the surface of the supply surface side $S_1$ of the interlayer sheet 4, to be caused to migrate to the absorbent body 3 situated on the non-supply surface side $S_2$ of the interlayer sheet 4.

According to the invention, the outer shape and size of the interlayer sheet is not limited to being essentially square, and any outer shape and size may be employed, depending on the purpose of use, so long as it can at least partially cover the surface on the supply surface side of the absorbent body situated on the non-supply surface side of the interlayer sheet; however, preferably the size of the interlayer sheet is a size approximately equal to or smaller than that of the surface on the supply surface side of the absorbent body, from the viewpoint of preventing diffusion of excreted fluid to regions where the absorbent body is not present.

Moreover, the interlayer sheet of the invention must have a liquid permeability of greater than 0 and smaller than that of the top sheet. If the liquid permeability is greater than 0, it will be possible to ensure a prescribed level of liquid permeability of the interlayer sheet, allowing excreted fluid to permeate the interlayer sheet in the thickness direction either after or during its diffusion in the in-plane direction on the surface of the interlayer sheet. If the liquid permeability is smaller than that of the top sheet, i.e. if the interlayer sheet is less permeable to excreted fluid than the top sheet, then when excreted fluid that has permeated the top sheet reaches the surface of the interlayer sheet, the difference in liquid permeability compared to the top sheet allows some of the excreted fluid to permeate into the interlayer sheet; however, most of the excreted fluid flows in a manner spreading in the in-plane direction on the surface of the interlayer sheet, so that it is diffused. During this time, the excreted fluid flowing on the surface of the interlayer sheet is unlikely to encounter flow resistance of the constituent fibers, as with a diffusion sheet in a conventional excreta treatment sheet for animals (i.e., a diffusion sheet that diffuses excreted fluid in the interior), and therefore the excreted fluid can be diffused over a wider area in the in-plane direction compared to a conventional excreta treatment sheet for animals, and as a result, the excreted fluid can be absorbed into the absorbent body over a wider region.

Known means for diffusing excreted fluid in the in-plane direction include forming recesses such as embossing in the interlayer sheet; however, simply forming such recesses only allows diffusion along the recesses, while adequate diffusion in the in-plane direction including the portions other than the recesses is not possible. Particularly when the excreta treatment sheet for animals is to be applied to a dog, since a dog may have the habit of urinating at different locations than previous urinations, simply forming such recesses only permits a limited degree of diffusion (i.e., diffusion along the recesses), depending on the urinating position of the dog, and in some cases the excreted fluid cannot be absorbed into the absorbent body over a wide region (i.e., the absorbent body cannot be efficiently utilized).

With the excreta treatment sheet for animals of the invention, however, the relationship between the liquid permeabilities of the top sheet and the interlayer sheet allows diffusibility in the in-plane direction to be exhibited at any location of the surface of the interlayer sheet, so that excreted fluid can be diffused over a wider area regardless of the urinating position of the animal.

Throughout the present description, "liquid permeability" means, as mentioned above, the mass ratio of the amount of a prescribed amount (10 ml) of artificial urine (i.e. physiological saline (22°C, 0.9% NaClaq)) supplied to the surface of an object (i.e. the top sheet or interlayer sheet) that permeates the object within a prescribed time period (within 10 minutes) (i.e., the mass ratio (mass%) of the amount of permeation with respect to the amount of physiological saline supplied), while "liquid permeation rate" means the speed at which a prescribed amount of artificial urine supplied to the surface of an object disappears from the surface of the object within a prescribed period of time (i.e., the time (sec) required for it to disappear from the surface of the object). The liquid permeability and liquid permeation rate can be measured in the following manner.

<Methods for measuring liquid permeability and liquid permeation rate>

(1) The object to be measured (i.e. the top sheet or interlayer sheet) is set on filter paper of previously measured mass (g) (for example, 10 cm length × 10 cm width square filter paper with a mass of 20 g), and a cylinder with a 60 mm inner diameter is set on the surface of the object to be measured (specifically, on the surface that is to be the supply surface side, within the excreta treatment sheet for animals).

(2) 10 ml of physiological saline of previously measured mass (g) is poured into the cylinder, supplying the physiological saline onto the surface of the object to be measured.

(3) The time (sec) from pouring of the physiological saline until all of the physiological saline disappears from the surface of the object to be measured (i.e., until it migrates into the object to be measured) is measured, and the measured time is recorded as the liquid permeation rate (sec) of the object to be measured. The time is measured up to a maximum of 10 minutes.

(4) After removing the cylinder and the object to be measured, the mass (g) of the filter paper that has absorbed the physiological saline under the object to be measured is measured. In step (3), when the physiological saline does not disappear from the surface of the object to be measured even after 10 minutes has elapsed from pouring in the physiological saline, the mass (g) of the filter paper is still measured at the point where 10 minutes has elapsed.

(5) By subtracting the premeasured mass of the filter paper from the mass of the filter paper that has absorbed the physiological saline, it is possible to calculate the mass of the physiological saline absorbed by the filter paper, or in other words, the mass (g) of the physiological saline that has permeated the object to be measured, and by dividing the mass of the physiological saline that has permeated the object to be measured by the premeasured amount (g) of the physiological saline and converting it to a percentage, it is possible to calculate the mass ratio (mass%) of the amount of permeation with respect to the amount of physiological saline supplied. The mass ratio of the amount of permeation with respect to the amount of physiological saline supplied obtained in this manner is recorded as the liquid permeability (mass%) of the object to be measured.

According to the invention, in addition to the condition of liquid permeability specified above (i.e., the condition of having liquid permeability that is greater than 0 and smaller than that of the top sheet), the interlayer sheet preferably also has a slower liquid permeation rate than the top sheet. If the liquid permeation rate of the interlayer sheet is slower than that of the top sheet, then when excreted fluid that has permeated the top sheet reaches the surface of the interlayer sheet, the permeation rate of excreted fluid in the thickness direction is the rate-determining step at the surface of the interlayer sheet, and therefore excreted fluid that is unable to migrate into the interlayer sheet pools on the surface of the interlayer sheet and tends to diffuse on the surface of the interlayer sheet in the in-plane direction. Thus, the excreta treatment sheet for animals comprising such an interlayer sheet allows excreted fluid to be diffused over a wider area in the in-plane direction, and as a result, excreted fluid can be absorbed into the absorbent body from a wider region.

According to the invention, the sheet-like member that may be used as the interlayer sheet is not particularly restricted so long as it satisfies the aforementioned condition of the liquid permeability, and for example, it is suitable to use a pulp-containing sheet that includes pulp such as wood pulp and having a basis weight of 40 g/m$^2$ or greater (for example, non-crepe paper such as woodfree paper or wood containing paper, or oil absorbing paper, or coffee filter or filter paper); a sheet-like fiber structure which may be a nonwoven fabric such as a spunbond nonwoven fabric, or a woven fabric or knitted fabric, formed of hydrophobic synthetic fibers (i.e., a hydrophobic fiber sheet); or a perforated or non-perforated resin sheet.

Preferred among such sheet-like members are the aforementioned pulp-containing sheets or hydrophobic fiber sheets, and especially woodfree paper, from the viewpoint of excellent liquid permeability, liquid permeation rate and liquid diffusibility. If the interlayer sheet is composed of a pulp-containing sheet, excreted fluid that has diffused in the in-plane direction on the surface of the interlayer sheet will be less likely to remain and can be caused to migrate more reliably to the absorbent body. Furthermore, if the interlayer sheet is composed of a hydrophobic fiber sheet, excreted fluid can be made less likely to permeate in the thickness direction due to the hydrophobicity of the synthetic fibers, while gaps between the synthetic fibers in the fiber sheet can be ensured as flow channels for excreted fluid, and therefore excreted fluid that has reached the surface of the interlayer sheet can be made to diffuse more slowly in the in-plane direction, while the diffused excreted fluid can be made to migrate more reliably into the absorbent body.

When a hydrophobic fiber sheet or resin sheet is used as the interlayer sheet, the constituent resin is not particularly restricted, and it may be a thermoplastic resin, for example, such as a polyolefin-based resin such as polyethylene or polypropylene or a polyester-based resin such as polyethylene terephthalate, such resins being used either alone, or two or more different types of resins being used in combination.

The interlayer sheet may include optional additives such as pigments, aromatics, deodorants, antimicrobial agents or the like on the surface and/or interior, so long as the effect of the invention is not impeded, such additives optionally being used in combinations of two or more types.

The basis weight of a sheet-like member to be used as the interlayer sheet is not particularly restricted so long as the effect of the invention is not inhibited, and for example, it may be in the range of 10 g/m$^2$ to 250 g/m$^2$, or preferably in the range of 15 g/m$^2$ to 150 g/m$^2$.

For this embodiment, the interlayer sheet 4 is formed with both sides, the supply surface side $S_1$ and the non-supply surface side $S_2$, being essentially flat, and having an approximately fixed thickness for the sheet as a whole. Here, "essentially flat" means a state that is flat without any shaping to create a protrusion-recess structure with respect to the sheet-like member forming the interlayer sheet; however, it may include fine protrusion-recess structures that are originally present in the sheet-like member (for example, protrusion-recess structures due to protrusions or depressions of the constituent fibers).

According to the invention, however, the structure of the interlayer sheet is not particularly restricted so long as the effect of the invention is not inhibited, and for example, when it is desired to add diffusibility in the in-plane direction and to control the diffusibility in a specific direction, the interlayer sheet may have any protrusion-recess structure on the surface of the supply surface side and/or the non-supply surface side, by any shaping means such as embossing, within a range that does not inhibit the effect of the invention.

The interlayer sheet may have a plurality of open holes running through the thickness direction, so long as the aforementioned liquid permeability requirement is satisfied. If the interlayer sheet has such a plurality of open holes it will be possible to ensure the prescribed level of liquid permeability, and therefore excreted fluid that has diffused on the surface of the interlayer sheet in the in-plane direction can be caused to migrate more reliably to the absorbent body, while appropriately setting the number of open holes, as well as their hole diameters (open area percentage), shapes and locations, will allow the liquid permeability of the interlayer sheet to be adjusted so that the diffusibility of excreted fluid in the in-plane direction can be regulated as desired.

For the embodiment described above, as shown in Fig. 2, the top sheet 2 and the interlayer sheet 4 are partially joined via the first adhesive layer 6 situated between them. When the top sheet 2 and interlayer sheet 4 are partially joined via the first adhesive layer 6 in this manner, then as shown in Fig. 2, the first adhesive layer 6 functions as a spacer between the top sheet 2 and interlayer sheet 4 allowing a prescribed space 6G to be secured, and consequently flow channels for excreted fluid to diffuse in the in-plane direction are ensured by the space 6G, while capillary movement that promotes diffusion in the in-plane direction can be more easily exhibited between the top sheet 2 and interlayer sheet 4. As a result, the excreta treatment sheet for animals 1 of this embodiment can cause diffusion of excreted fluid between the top sheet 2 and the interlayer sheet 4 (i.e., on the surface of the interlayer sheet 4) over an even wider area in the in-plane direction.

Incidentally, the type, coating amount and coating form of the adhesive forming the first adhesive layer is not particularly restricted so long as the effect of the invention is not inhibited, and the first adhesive layer may be formed by situating any adhesive such as a hot-melt adhesive between the top sheet and the interlayer sheet, with any desired coating amount (for example, a coating amount in the range of 0.1 g/m$^2$ to 10 g/m$^2$) and any desired form of coating (for example, spiral, dotted or striped forms).

The dimensional shape and thickness of the interlayer sheet for the invention are not particularly limited so long as the effect of the invention is not inhibited, and any dimensional shape or thickness may be employed according to the desired liquid permeability, liquid diffusibility and strength.

[Absorbent body]

In the excreta treatment sheet for animals 1 of this embodiment, the absorbent body 3 is situated in a region of the excreta treatment sheet for animals 1 that includes the center section, and it has an essentially square outer shape extending in the first direction $D_1$ and the second direction $D_2$, in the plan view. The absorbent body 3 also situated between the interlayer sheet 4 and the back sheet 5 in the thickness direction $D_T$ of the excreta treatment sheet for animals 1, and it is formed of an absorbing member that is able to absorb and hold excreted fluid that has migrated to the non-supply surface side $S_2$ either after having diffused or while diffusing in the in-plane direction on the surface of the interlayer sheet 4.

According to the invention, the outer shape of the absorbent body is not limited to an essentially square shape, and any desired outer shape (for example, rectangular, circular or oblong shaped) may be employed according to the particular purpose of use, so long as the prescribed absorption performance can be exhibited.

As shown in Fig. 2, the absorbent body 3 of this embodiment is composed of an absorbent core 30 formed of an absorbent material that can absorb and hold excreted fluid, a hydrophilic first core wrap sheet 33 situated on the supply surface side $S_1$ of the absorbent core 30, and a hydrophilic second core wrap sheet 34 that covers the absorbent core 30 and the first core wrap sheet 33 so as to envelop them from the non-supply surface side $S_2$. In addition, as shown in Fig. 2, the absorbent core 30 is formed of an absorbent material composed of a mixture of pulp 31 and a superabsorbent polymer 32.

If the absorbent body 3 includes pulp 31 and a superabsorbent polymer 32, then it will be possible to ensure a fixed absorption rate (absorption capacity) while also controlling the absorption rate of the absorbent body 3, by the superabsorbent polymer 32 which has a slow absorption rate, and therefore excreted fluid that has reached the absorbent body 3 will more easily pool on the surface of the absorbent body 3 and will be able to easily diffuse in the in-plane direction on the surface of the absorbent body 3.

Therefore, the excreta treatment sheet for animals 1 comprising such an absorbent body 3 can diffuse excreted fluid in the in-plane direction, not only on the surface of the interlayer sheet 4 but also on the surface of the absorbent body 3, thus allowing excreted fluid to be absorbed into the absorbent body 3 over an even wider region.

According to the invention, the absorbent material to be used in the absorbent body is not limited to that of the embodiment described above so long as it can absorb and hold excreted fluid such as urine, and any absorbent material known in the relevant field may be used. Examples of such absorbent materials include cellulosic fibers such as pulp such as fluff pulp, cotton, rayon or acetate; granules composed of superabsorbent polymers such as sodium acrylate copolymer; or mixtures comprising any desired combinations of these. The basis weight of such absorbent materials is not particularly restricted so long as the effect of the invention is not inhibited, and any basis weight may be used in consideration of the desired absorption performance and liquid diffusibility (for example, a basis weight in the range of 10 g/m² to 250 g/m²).

The structure of the absorbing member composing the absorbent body is also not particularly restricted so long as the effect of the invention is not inhibited, and the absorbing member may have a single-layer structure comprising a single absorbent core layer, as in the embodiment described above, or it may have a multilayer structure comprising two or more absorbent core layers.

Incidentally, the core wrap sheets situated respectively on the supply surface side and the non-supply surface side of the absorbent core are also not particularly restricted so long as the effect of the invention is not inhibited, and for example, each may be tissue paper with a basis weight of about 13.0 g/m² to 13.5 g/m², formed using Northern bleached Kraft pulp as the main starting material, or any desired nonwoven fabric such as an air-through nonwoven fabric or spunbond nonwoven fabric.

The location where the absorbent body is disposed in the plan view is also not particularly restricted so long as the excreta treatment sheet for animals can be delineated into the center section and flap sections, and the absorbent body may be disposed with a certain degree of bias in one desired direction with respect to the center of the excreta treatment sheet for animals, in the plan view.

For the embodiment described above, as shown in Fig. 2, the interlayer sheet 4 and absorbent body 3 are partially joined via a second adhesive layer 7 situated between them. When the interlayer sheet 4 and absorbent body 3 are partially joined via the second adhesive layer 7 in this manner, then as shown in Fig. 2, the second adhesive layer 7 functions as a spacer between the interlayer sheet 4 and the absorbent body 3, allowing a prescribed space 7G to be secured, and consequently flow channels for excreted fluid to diffuse in the in-plane direction are ensured by the space 7G, while capillary movement that promotes diffusion in the in-plane direction can be more easily exhibited between the interlayer sheet 4 and the absorbent body 3. As a result, the excreta treatment sheet for animals 1 can cause diffusion of excreted fluid between the interlayer sheet 4 and absorbent body 3 (i.e., on the surface of the absorbent body 3) over a wider area in the in-plane direction.

Incidentally, the type of adhesive forming the second adhesive layer, and its coating amount and coating form, are not particularly restricted so long as the effect of the invention is not inhibited, and the second adhesive layer may use the same adhesive, coating amount and coating form as the adhesive forming the first adhesive layer.

For the embodiment described above, the absorbent body 3 has slightly smaller outer dimensions than the top sheet 2 and back sheet 5, in the plan view; however, according to the invention the outer dimension and thickness of the absorbent body are not particularly restricted so long as the effect of the invention is not inhibited, and any outer dimension and thickness may be employed, depending on the size and type of animal to which the excreta treatment sheet for animals is to be applied.

[Back sheet]

In the excreta treatment sheet for animals 1 of the embodiment described above, as shown in Fig. 1, the back sheet 5 is formed of a liquid-impermeable sheet-like member that has an essentially square outer shape similar to the outer shape of the excreta treatment sheet for animals 1, extending from the edge on one side across to the edge on the other side in the first direction $D_1$ of the excreta treatment sheet for animals 1, while extending from the edge on one side across to the edge on the other side in the second direction $D_2$, and that in the thickness direction $D_T$ of the excreta treatment sheet for animals 1, is disposed at a location that is facing the surface on which the excreta treatment sheet for animals 1 is set (i.e., the setting surface) (in other words, a location on the non-supply surface side $S_2$), and functions so that excreted fluid that has been absorbed and held in the excreta treatment sheet for animals 1 is prevented from leaking outside of the excreta treatment sheet for animals 1.

For the embodiment described above, the back sheet 5 is joined to the top sheet 2 by optional joining means (for example, adhesive means using a hot-melt adhesive or the like, or fusing means using heat fusion or ultrasonic fusion), at the flap sections of the excreta treatment sheet for animals 1.

According to the invention, the liquid-impermeable sheet-like member that may be used as the back sheet is not particularly restricted so long as it has the prescribed liquid impermeability as a liquid-impermeable sheet-like member, and for example, a resin sheet formed from a thermoplastic resin, such as a polyolefin-based resin such as polyethylene or polypropylene, or a polyester resin such as polyethylene terephthalate; a laminate of a nonwoven fabric attached to the resin sheet; a laminate resin sheet obtained by laminating together different resin sheets (for example, polyethylene/polypropylene layered sheets); or a water-repellent or hydrophobic nonwoven fabric, may be suitably used.

The basis weight of the back sheet is not particularly restricted so long as it has the prescribed liquid impermeability and strength, and it may be in the range of 5 g/m² to 50 g/m², for example, and is preferably in the range of 10 g/m² to 30 g/m².

For the embodiment described above, the back sheet 5 has essentially the same outer shape and outer dimensions as the top sheet 2, in the plan view; however, according to the invention the outer shape and outer dimensions used for the back sheet may be any outer shape and outer dimensions suited for the particular purpose of use, so long as at least the surface on the non-supply surface side of the absorbent body can be completely covered from the non-supply surface side.

The dimensional shape and thickness of the back sheet are not particularly limited so long as the effect of the invention is not inhibited, and any dimensional shape or thickness may be employed according to the desired liquid impermeability and strength.

The excreta treatment sheet for animals of the invention is not restricted to the embodiment described above, and it may incorporate appropriate combinations, substitutes and modifications in a range that is not outside of the object and gist of the invention. Incidentally, the ordinal terms "first" and "second" as used throughout the present description serve merely to distinguish between the numbered embodiments and are not used to mean any relative ordering, precedence or importance.

EXAMPLES

The invention will now be explained in greater detail using examples and comparative examples, with the understanding that the invention is not limited only to these examples.

Example 1

A top sheet composed of a low-density polyethylene perforated film (PF film, open area percentage: 48%, supply surface side hole diameter: 0.7 mm, non-supply surface side hole diameter: 0.5 mm, basis weight: 24 g/m², thickness: 0.4 mm), an interlayer sheet composed of woodfree paper (High-Strength, High-Quality Imitation Paper TA 200, product of Kanko Kogyo Co., Ltd., basis weight: 68 g/m², thickness: 0.09 mm), an absorbent body consisting of an absorbent material comprising a mixture of 100 g/m² of a superabsorbent polymer (SAP, "AQUA KEEP" SA60, product of Sumitomo Seika Chemicals Co., Ltd.) and 50 g/m² of pulp, covered by a tissue with a basis weight of 13.5 g/m², and a back sheet made of a polyethylene film, were prepared as constituent members, and the constituent members were joined with a hot-melt adhesive (adhesive arrangement: spiral, width: 10 mm, pitch: 50 mm), to obtain an excreta treatment sheet for animals for Example 1.

Examples 2 to 7

Excreta treatment sheets for animals for Examples 2 to 7 were obtained in the same manner as Example 1, except that the interlayer sheets were changed to wood containing paper ("HIGHLAND", product of Nippon Paper Group, Inc., basis weight: 54 g/m$^2$, thickness: 0.07 mm), oil absorbing paper ("Tempura Shikishi 44 g", product of Nittoku Paper Products, basis weight: 44 g/m$^2$, thickness: 0.11 mm), a polyethylene perforated film ("perforated film", polyethylene film of basis weight: 17 g/m$^2$, perforated with circular holes of 1.5 mm diameter arranged in a lattice at a 30 mm pitch), a low-basis-weight spunbond nonwoven fabric ("SB-1", basis weight: 18 g/m$^2$), a high-basis-weight spunbond nonwoven fabric ("SB-2", basis weight: 30 g/m$^2$) and a spunbond nonwoven fabric with open holes ("perforated SB", hole diameter: 1.5 mm, hole pitch: 20 mm, basis weight: 30 g/m$^2$), respectively.

Example 8

An excreta treatment sheet for animals for Example 8 was obtained in the same manner as Example 1, except that the top sheet was changed to an air-through nonwoven fabric ("AT", product of Havix Corp., basis weight: 20 g/m$^2$, thickness: 0.37 mm).

Comparative Examples 1 to 4

Excreta treatment sheets for animals for Comparative Examples 1 to 4 were obtained in the same manner as Example 1, except that the interlayer sheet was changed to a tissue (basis weight: 13.5 g/m$^2$), a tissue with recesses formed by embossing ("embossed tissue", basis weight: 13.5 g/m$^2$, embossing conditions: pressure at 20 Kg/cm$^2$ to form lattice-like recesses with widths of 1.5 mm and a line pitch of 16.5 mm), kraft paper ("Kraft Paper Roll" TA 250 by Kanko Kogyo Co., Ltd., basis weight: 85 g/m$^2$, thickness: 0.14 mm) and a hydrophilicized spunbond nonwoven fabric ("hydrophilic SB", basis weight: 18 g/m$^2$, thickness: 0.18 mm).

The liquid permeabilities and liquid permeation rates of the top sheets and interlayer sheets used in the excreta treatment sheets for animals of each of the Examples and Comparative Examples were measured according to <Methods for measuring liquid permeability and liquid permeation rate> above. The compositions of the top sheets and interlayer sheets and the measurement results for their liquid permeability and liquid permeation rate are shown in Table 1 below.

The diffusion areas (cm$^2$) and rewetting amounts (g) for the excreta treatment sheets for animals of each of the Examples and Comparative Examples were measured according to <Evaluation test methods for liquid diffusibility and rewetting> below. The measurement results for the diffusion area and rewetting amount are shown in Table 1 below.

<Evaluation test methods for liquid diffusibility and rewetting>

(1) The excreta treatment sheet for animals in the expanded state was set on a horizontal plane, and a burette containing 10 ml of physiological saline, as artificial urine, was set above the excreta treatment sheet for animals.
(2) The total 10 ml of physiological saline in the burette was dropped onto the excreta treatment sheet for animals.
(3) After 2 minutes elapsed from dropping of the physiological saline, the diffusion length ($L_1$) in the first direction and the diffusion length ($L_2$) in the second direction was measured for physiological saline diffused within the excreta treatment sheet for animals, and the diffusion area (cm$^2$) was calculated based on the following formula.

$$\text{Diffusion area (cm}^2) = (L_1/2) \times (L_2/2) \times 3.14$$

(4) After 3 minutes elapsed from dropping of the physiological saline, 20 g of filter paper (for example, 10 cm length × 10 cm width square filter paper) was set on the excreta treatment sheet for animals, and a 3.5 Kg deadweight was additionally placed on the filter paper.
(5) After 5 minutes elapsed from dropping of the physiological saline, the deadweight was removed and the mass (g) of the filter paper was measured, and then the mass (g) of physiological saline absorbed by the filter paper was calculated from the change in mass (g) of the filter paper. The calculated value was recorded as the rewetting amount (g).

For the excreta treatment sheets for animals of each of the Examples and Comparative Examples, an overall evaluation of migration and diffusibility into the absorbent body was conducted based on the measurement results for the liquid permeability of the interlayer sheet and the diffusion area of the excreta treatment sheet for animals, using the following <Judgment criteria>. The overall evaluation results are shown in Table 1.

<Judgment criteria>

VG: Both migration into the absorbent body and diffusibility were especially good.
G: Both migration into the absorbent body and diffusibility were good.
F: Either migration into the absorbent body and/or diffusibility were poor.
P: Either migration into the absorbent body and/or diffusibility were completely or essentially not exhibited.

[Table 1]

Table 1

| | | Example 1 | Example 2 | Example 3 | Example 4 | Example 5 | Example 6 | Example 7 | Example 8 | Comp. Example 1 | Comp. Example 2 | Comp. Example 3 | Comp. Example 4 |
|---|---|---|---|---|---|---|---|---|---|---|---|---|---|
| Top sheet | Material | PF film | PF film | PF film | PF film | PF film | PF film | PF film | AT | PF film | PF film | PF film | PF film |
| | Basis weight $(g/m^2)$ | 24 | 24 | 24 | 24 | 24 | 24 | 24 | 20 | 24 | 24 | 24 | 24 |
| | Liquid permeability (mass%) | 99 | 99 | 99 | 99 | 99 | 99 | 99 | 99 | 99 | 99 | 99 | 99 |
| | Liquid permeation rate (sec) | 5.3 | 5.3 | 5.3 | 5.3 | 5.3 | 5.3 | 5.3 | 2.5 | 5.3 | 5.3 | 5.3 | 5.3 |
| Interlayer sheet | Material | Woodfree paper | Wood containing paper | Oil absorbing paper | Perforated film | SB-1 | SB-2 | Perforated SB | Woodfree paper | Tissue | Embossed tissue | Kraft paper | Hydrophilic SB |
| | Basis weight $(g/m^2)$ | 68 | 54 | 44 | 130 | 18 | 30 | 30 | 68 | 13.5 | 13.5 | 85 | 18 |
| | Liquid permeability (mass%) | 95 | 98 | 97 | 74 | 87 | 56 | 97 | 95 | 99 | 99 | 0 | 99 |
| | Liquid permeation rate (sec) | 247 | 170 | 10.8 | 130 | >600 | >600 | 35.6 | 247 | 5.3 | 5.2 | >600 | 6.1 |
| Liquid diffusibility evaluation | Diffusion area $(cm^2)$ | 318 | 257 | 230 | 180 | 227 | 287 | 104 | 275 | 86 | 90 | 318 | 82 |
| Rewetting evaluation | Rewetting amount (g) | 0.1 | 0.1 | 0.1 | 1.7 | 0.1 | 0.1 | 0.1 | 1.3 | 0.1 | 0.1 | 4.5 | 0.1 |
| Overall evaluation | | VG | VG | G | G | G | G | G | G | F | F | P | F |

As shown in Table 1, the excreta treatment sheets for animals of Examples 1 to 8, which satisfied the condition for the liquid permeability (i.e., the condition of having a liquid permeability of greater than 0 and smaller than that of the top sheet), were especially good, or good, in terms of both migration into the absorbent body and diffusibility, compared to the excreta treatment sheets for animals of Comparative Examples 1 to 4 which did not satisfy the condition for the liquid permeability.

In particular, the excreta treatment sheets for animals of Comparative Examples 1 and 4, which used hydrophilic interlayer sheets with excellent liquid permeability, and the excreta treatment sheet for animals of Comparative Example 2, which used an interlayer sheet having recesses formed by embossing, as in the prior art, each had high liquid permeability for the interlayer sheet, and although migration into the absorbent body was excellent, diffusibility in the in-plane direction was limited, and it was not possible to adequately diffuse artificial urine in the in-plane direction.

In addition, the excreta treatment sheet for animals of Comparative Example 3 had excellent diffusibility in the in-plane direction; however, the liquid permeability of the interlayer sheet was 0 and artificial urine did not permeate the interlayer sheet in the thickness direction, and therefore artificial urine could not be absorbed into the absorbent body.

Moreover, comparison between Example 1 and Example 8 showed that the rewetting amount could be reduced when a perforated film (PF film) was used as the top sheet.

REFERENCE SIGNS LIST

1 Excreta treatment sheet for animals
2 Top sheet
20 Open hole
21 First surface
22 Second surface
23 Base
24 Gap
3 Absorbent body
30 Absorbent core
31 Pulp
32 Superabsorbent polymer
33 First core wrap sheet
34 Second core wrap sheet
4 Interlayer sheet
5 Back sheet
6 First adhesive layer
7 Second adhesive layer

**Claims**

1.  An excreta treatment sheet (1) for an animal including:

    a liquid-permeable top sheet (2) that forms a supply surface (11) for excreta,

        wherein the top sheet (2) has a plurality of open holes (20) running through a thickness direction,
        wherein each of the open holes (20) is formed so that a hole diameter on a first surface (21) forming the supply surface (11) of the top sheet (2) is larger than a hole diameter on a second surface (22) opposite the first surface (21), and
        wherein between adjacent open holes (20), the top sheet (2) has a gap (24) where the second surface (22) is depressed toward a supply surface side (S1),

    an absorbent body (3), and
    an interlayer sheet (4) situated between them,

        wherein the interlayer sheet (4) has a liquid permeability of greater than 0 and smaller than that of the top sheet (2),
        wherein the interlayer sheet (4) has a slower liquid permeation rate than that of the top sheet (2), and

wherein the interlayer sheet (4) is a fiber sheet formed of hydrophobic synthetic fibers.

2. The excreta treatment sheet (1) for an animal according to claim 1, wherein the top sheet (2) is hydrophilic.

3. The excreta treatment sheet (1) for an animal according to claim 1 or 2, wherein the interlayer sheet (4) includes pulp and has a basis weight of 40 g/m$^2$ or greater.

4. The excreta treatment sheet (1) for an animal according to any one of claims 1 to 3, wherein the interlayer sheet (4) has a plurality of open holes running through a thickness direction.

5. The excreta treatment sheet (1) for an animal according to any one of claims 1 to 4, wherein the absorbent body (3) includes pulp (31) and a superabsorbent polymer (32).

6. The excreta treatment sheet (1) for an animal according to any one of claims 1 to 5, wherein the top sheet (2) and the interlayer sheet (4) are partially joined via an adhesive layer (6) situated between them.

7. The excreta treatment sheet (1) for an animal according to any one of claims 1 to 6, wherein the interlayer sheet (4) and the absorbent body (3) are partially joined via an adhesive layer (7) situated between them.

**Patentansprüche**

1. Folie zur Entsorgung von Ausscheidungen (1) für ein Tier, welche aufweist:

eine flüssigkeitsdurchlässige obere Schicht (2), die eine Zufuhrfläche (11) für Ausscheidungen bildet,

wobei die obere Schicht (2) eine Vielzahl an offenen Löchern (20) aufweist, die durch eine Dickenrichtung verlaufen,
wobei jedes der offenen Löcher (20) auf eine solche Weise ausgebildet ist, dass ein Lochdurchmesser auf einer ersten Oberfläche (21), die die Zufuhrfläche (11) der oberen Schicht (2) bildet, größer als ein Lochdurchmesser auf einer zweiten Oberfläche (22) ist, die gegenüber der ersten Fläche (21) ist, und
wobei zwischen benachbarten offenen Löchern (20) die obere Schicht (2) eine Lücke (24) aufweist, bei der die zweite Oberfläche (22) in Richtung auf eine Seite (S1) der Zufuhrfläche niedergedrückt ist,

einen absorbierenden Körper (3), und
eine Zwischenschicht (4), die dazwischen angeordnet ist,

wobei die Zwischenschicht (4) eine Flüssigkeitsdurchlässigkeit von mehr als 0 und kleiner als die der oberen Schicht (2) aufweist,
wobei die Zwischenschicht (4) eine langsamere Rate der Flüssigkeitsdurchlässigkeit als die der oberen Schicht (2) aufweist, und
wobei die Zwischenschicht (4) eine Faserschicht ist, die aus hydrophoben synthetischen Fasern gebildet worden ist.

2. Folie zur Entsorgung von Ausscheidungen (1) für ein Tier nach Anspruch 1, wobei die obere Schicht (2) hydrophil ist.

3. Folie zur Entsorgung von Ausscheidungen (1) für ein Tier nach Anspruch 1 oder 2, wobei die Zwischenschicht (4) einen Zellstoff enthält und ein Basisgewicht von 40 g/m$^2$ oder mehr aufweist.

4. Folie zur Entsorgung von Ausscheidungen (1) für ein Tier nach einem der Ansprüche 1 bis 3, wobei die Zwischenschicht (4) eine Vielzahl an offenen Löchern aufweist, die durch eine Dickenrichtung verlaufen.

5. Folie zur Entsorgung von Ausscheidungen (1) für ein Tier nach einem der Ansprüche 1 bis 4, wobei der absorbierende Körper (3) einen Zellstoff (31) und ein superabsorbierendes Polymer (32) enthält.

6. Folie zur Entsorgung von Ausscheidungen (1) für ein Tier nach einem der Ansprüche 1 bis 5, wobei die obere Schicht (2) und die Zwischenschicht (4) teilweise über eine Klebeschicht (6), die dazwischen angeordnet ist, verbunden sind.

**7.** Folie zur Entsorgung von Ausscheidungen (1) für ein Tier nach einem der Ansprüche 1 bis 6, wobei die Zwischenschicht (4) und der absorbierende Körper (3) teilweise über eine Klebeschicht (7), die dazwischen angeordnet ist, verbunden sind.

**Revendications**

**1.** Feuille de traitement d'excréments (1) pour un animal comprenant :

une feuille supérieure (2) perméable aux liquides qui forme une surface d'alimentation (11) pour des excréments, dans laquelle la feuille supérieure (2) comporte une pluralité de trous ouverts (20) passant à travers une direction de l'épaisseur,
dans laquelle chacun des trous ouverts (20) est formé de sorte qu'un diamètre de trou sur une première surface (21) formant la surface d'alimentation (11) de la feuille supérieure (2) est plus grand qu'un diamètre de trou sur une seconde surface (22) opposée à la première surface (21), et
dans laquelle entre des trous ouverts (20) adjacents, la feuille supérieure (2) comporte un espace (24) où la seconde surface (22) est abaissée vers un côté surface d'alimentation (S1),
un corps absorbant (3), et
une feuille intermédiaire (4) située entre eux,
dans laquelle la feuille intermédiaire (4) présente une perméabilité aux liquides supérieure à 0 et inférieure à celle de la feuille supérieure (2),
dans laquelle la feuille intermédiaire (4) présente une vitesse de perméation des liquides inférieure à celle de la feuille supérieure (2), et
dans laquelle la feuille intermédiaire (4) est une feuille de fibres formée de fibres synthétiques hydrophobes.

**2.** Feuille de traitement d'excréments (1) pour un animal selon la revendication 1, dans laquelle la feuille supérieure (2) est hydrophile.

**3.** Feuille de traitement d'excréments (1) pour un animal selon la revendication 1 ou 2, dans laquelle la feuille intermédiaire (4) comprend de la pâte et présente un grammage de 40 g/m$^2$ ou supérieur.

**4.** Feuille de traitement d'excréments (1) pour un animal selon l'une quelconque des revendications 1 à 3, dans laquelle la feuille intermédiaire (4) comporte une pluralité de trous ouverts passant à travers une direction de l'épaisseur.

**5.** Feuille de traitement d'excréments (1) pour un animal selon l'une quelconque des revendications 1 à 4, dans laquelle le corps absorbant (3) comprend une pâte (31) et un polymère superabsorbant (32).

**6.** Feuille de traitement d'excréments (1) pour un animal selon l'une quelconque des revendications 1 à 5, dans laquelle la feuille supérieure (2) et la feuille intermédiaire (4) sont partiellement reliées par l'intermédiaire d'une couche adhésive (6) située entre elles.

**7.** Feuille de traitement d'excréments (1) pour un animal selon l'une quelconque des revendications 1 à 6, dans laquelle la feuille intermédiaire (4) et le corps absorbant (3) sont partiellement reliés par l'intermédiaire d'une couche adhésive (7) située entre eux.

FIG. 1

# FIG. 2

# FIG. 3

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1554927 A

- JP 2009254345 A